# EUROPEAN PATENT APPLICATION

(11) **EP 1 734 757 A2**
(43) Date of publication of application: **20.12.2006**
(21) Application number: 06121761.8
(22) Date of filing: 30.07.2003
(51) Int. Cl.: H04N 5/445

(54) **Video recording/reproducing apparatus and method of displaying a menu guide**

(30) Priority: 08.08.2002 KR 20020046942
(62) Divisional of application: 03254771.3
(71) Applicant: SAMSUNG ELECTRONICS CO., LTD., Suwon-si Gyeonggi-do 442-742 (KR)
(72) Inventor: Kim, Chul-min 924-1601 Beokjeokgol 9danji Apt., Gyunggi-do (KR); Choi, Hye-jin 204, 153-96 Maetan-1-dong, Gyunggi-do (KR)
(74) Representative: Robinson, Ian Michael

(57) **Abstract**

A video recording/reproducing apparatus and a method for displaying a menu guide. The video recording/reproducing apparatus (100) has a main control unit (160) which, upon receiving via the interface unit a request signal for a screen of a combine menu, is adapted to control the video recording/reproducing apparatus (100) to display the screen of the combine menu on the display device (300) with a plurality of still videos displayed for selection by a user in order to combine a selected plurality of programs corresponding to the still videos as a single program.

## Description

The present invention relates to a video recording/reproducing apparatus and a method for displaying a menu guide.

In general, a video recording/reproducing apparatus records broadcasting signals on a recording medium, or reproduces such recorded signals from the recording medium. With the development of the digitalization of the broadcasting signals and compression skills, functions of the video recording/reproducing apparatus have expanded.

Currently, most image recording/reproducing apparatuses employ a hard disk drive as a large capacity memory device. Much research is underway for the application of such video recording/reproducing apparatuses in various image sources such as the satellite broadcasting signal sources, cable broadcasting sources, networks for broadcasting through the Internet, and so on. However, with the increase of application of video recording/reproducing apparatus in such image sources and the subsequent expansion of their functions, the operators of the video recording/reproducing apparatuses are burdened with more complicated processes to perform various functions of the recording/reproducing apparatuses, such as channel selection or viewing the programs recorded in the recording apparatus.

Accordingly, it is an aim of embodiments of the present invention to provide a video recording/reproducing apparatus which is provided with a menu guide which enables an operator to easily use various functions supported by the video recording/reproducing apparatus, and a method for displaying the menu guide.

According to the present invention there is provided an apparatus and method as set forth in the appended claims. Preferred features of the invention will be apparent from the dependent claims, and the description which follows.

According to an aspect of the present invention there is provided a video recording/reproducing apparatus, for recording an image signal from an image signal generating source in a memory device and reproducing and outputting the recorded image signal to an external display device. The video recording/reproducing apparatus includes an interface unit, installed in a body of the video recording/reproducing apparatus, for receiving a user input signal from an external input device, and enabling functions supported in the video recording/reproducing apparatus to be selectable via the external input device. The video recording/reproducing apparatus further includes a main control unit which, upon receiving via the interface unit a request signal for a screen of menu guide list for a user to select the functions supported in the video recording/reproducing apparatus, controlling the video recording/reproducing apparatus to display the screen of menu guide list on the display device with a main menu being arranged in a left-most region of the screen of menu guide list in a vertical column, and upon receiving a selection signal with respect to the main menu, controlling the video recording/reproducing apparatus to display a sub-menu of the main menu at the right side of the block of the main menu in a vertical column.

The screen of menu guide list is preferably divided into an upper, middle and lower regions, with the middle region displaying the main menu in the vertical column.

Furthermore, upon receiving the request signal for the screen of menu guide list, the main control unit preferably controls the video recording/reproducing apparatus to display the main menu in a first block formed in the left-most side of a plurality of blocks divided in the middle region along a horizontal direction, and with the selection of one from a list of the main menu formed in the first block in the vertical column, the main control unit controls the video recording/reproducing apparatus to display a first sub-menu of the main menu in a second block together with the main menu in the first block, with the second block being formed next to the first block in the right side.

In addition, preferably upon the selection of one from a list of the first sub-menu arranged in the second block in the vertical column, the main control unit controls the video recording/reproducing apparatus to display a second sub-menu of the first sub-menu in a third block together with the main menu in the first block and the first sub-menu in the second block, with the third block being formed next to the second block in the right side, and the selected first sub-menu having sub-menu of its own.

The main control unit may further control the video recording/reproducing apparatus to display execution information of the selected first sub-menu in the middle region, with the selected first sub-menu having no sub-menu of its own.

The main control unit may further control the video recording/reproducing apparatus to display in the upper region information about items corresponding to the contents displayed in the middle region. The main control unit may also control the video recording/reproducing apparatus to displays in the lower region information about key manipulation of the external input device corresponding to the screen of the menu guide list.

The external input device in one example is a remote controller having a plurality of keys formed thereon, and transmits an infrared light in accordance with the selection of the keys, and the interface unit is a light receiving unit that receives the infrared signal from the remote controller.

The remote controller is preferably provided with a menu key, and the main control unit upon reception of menu key selection signal outputs the screen of menu guide list to the display device. With the input of menu key selection signal in the state of displaying the screen of menu guide list on the display device, the main control unit controls the video recording/reproducing apparatus to close the screen of menu guide list so that the screen of menu guide list may not be displayed on the display device.

The image signal generating source may comprise at least one of: a tuner for receiving a broadcasting signal; a disc player for reproducing a signal recorded on a recording medium; and an external input terminal for receiving an image signal from an external device.

Furthermore, the present invention provides a method for displaying a menu screen of a video recording/reproducing apparatus that records an image signal from an image signal generating source in a memory device and reproduces and outputs the recorded image signal to an external display device. The method includes the steps of: upon receiving a request signal for a screen of menu guide list from an external input device through which a function supported in the video recording/reproducing apparatus is selected, displaying the screen of menu guide list on the display device with a main menu being arranged in a left-most region of the screen of menu guide list in a vertical column; and upon receiving a selection signal with respect to the main menu from the external input device, displaying a sub-menu of the main menu at the right side of the block of the main menu in a vertical column.

For a better understanding of the invention, and to show how embodiments of the same may be carried into effect, reference will now be made, by way of example, to the accompanying diagrammatic drawings in which:
Figure 1 is a view showing a display system having a video recording/reproducing apparatus according to an embodiment of the present invention;
Figure 2 is a block diagram of the video recording/reproducing apparatus of Figure 1;
Figure 3 is a plan view of the remote controller of Figure 1;
Figure 4 is a view showing a screen of an initial menu guide list being displayed on a display device according to a selection of the menu key of Figure 3;
Figure 5 is a view showing a screen of a menu guide list being displayed according to a selection of the first main menu of Figure 4;
Figure 6 is a view showing a screen of a menu guide list being displayed according to a selection of the first sub-menu of Figure 5;
Figure 7 is a view showing a screen of guide information on the programs stored in a storage device according to a menu selection on the program list of Figure 5;
Figure 8 is a view showing a password input window being displayed according to a selection of parental lock menu of Figure 5;

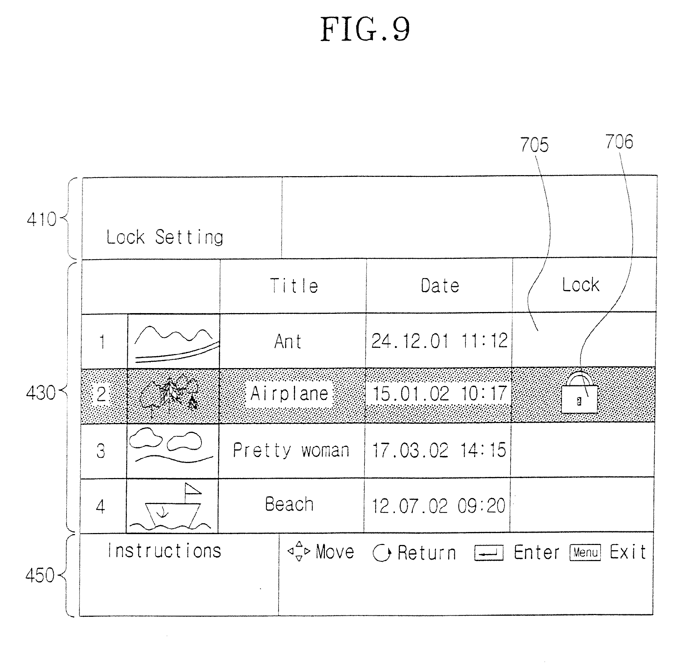

Figure 9 is a view showing a screen being displayed according to a selection of the lock-setting menu as the second sub-menu of Figure 6, for an operator to carry out a lock-setting with respect to the programs stored in the storage device;
Figure 10 is a view showing a screen of a menu guide list being displayed according to a selection of the edit menu of Figure 5;
Figure 11 is a view showing a screen being displayed according to a selection of a combine menu of Figure 10;
Figure 12 is a view showing a screen being displayed according to a selection of divide menu of Figure 10;
Figure 13 is a view showing a screen of a menu guide list being displayed according to a selection of the record menu of Figure 5;
Figure 14 is a view showing a screen being displayed according to a selection of the timer program menu of Figure 13, for an operator to select a desired image source and set the conditions for recording;
Figure 15 is a view showing a screen of a menu list, showing one example of the second main menu of Figure 4;
Figure 16 is a view showing a screen being provided according to a selection of the lock-setting menu of Figure 15, allowing an operator to set the viewer classification;
Figure 17 is a view showing a screen of a menu guide list, showing one example of the first sub-menu list of the third main menu of Figure 4;
Figure 18 is a view showing a screen of a menu guide list, showing one example of the first sub-menu list of the fourth main menu of Figure 4; and
Figure 19 is a view showing a screen of a menu guide list, showing one example of the firs sub-menu list of the fifth main menu of Figure 4.

Hereinafter, certain embodiments of the present invention will be described in detail with reference to the accompanying drawings.

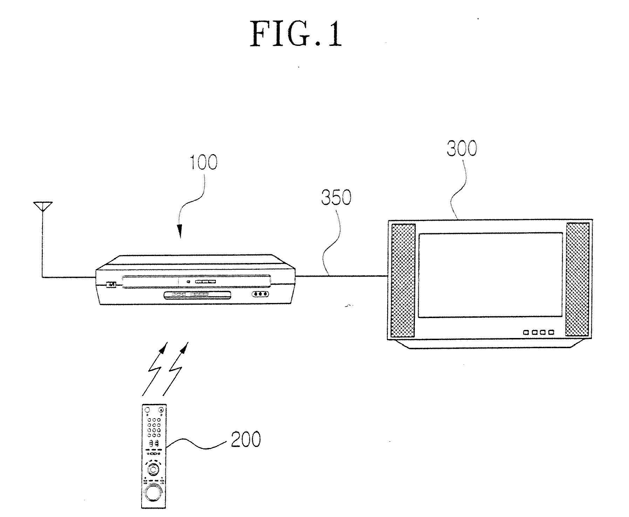

Figure 1 schematically shows a display system having a video recording/reproducing apparatus according to an embodiment of the present invention.

Referring to Figure 1, the video recording/reproducing apparatus 100 is connected to a display device which, in this example, is a television 300, through a transmission cable 350.

The video recording/reproducing apparatus 100 processes the signals received from an external input device which, in this example, is a remote controller 200, and transmits display information to the television 300. In addition to the remote controller 200 that sends out wireless signals such as infrared light, wired input devices such as a keyboard or the like can also be used as the external input device.

The video recording/reproducing apparatus 100 is constructed to receive at least one type of image signal from a plurality of image sources. The image sources may include a terrestrial television broadcasting source, satellite broadcasting source, cable incoming line, computer line, or other types of medium that can transmit signals. In other words, the embodiments of the present invention described below can be applied as the video recording/reproducing apparatus constructed to receive signals from at least one of the following: cable, a satellite dish, local cable, a digital broadcast source (DBS), a general antenna, the Internet, other computer sources, a camcorder, a disk player, a set-top box, and so on.

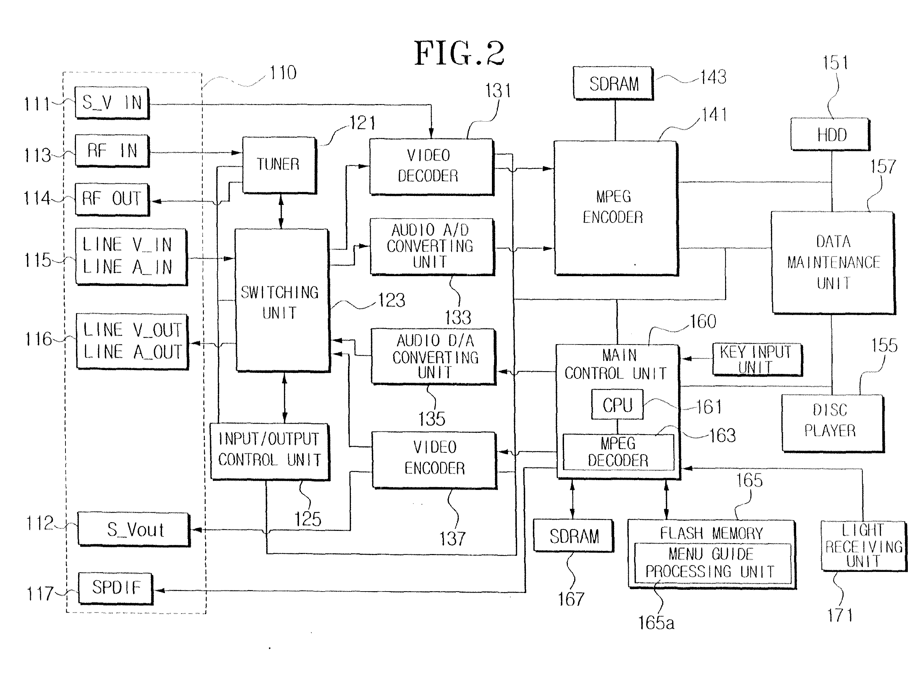

Figure 2 shows a block diagram of an example of such a video recording/reproducing apparatus.

Referring to Figure 2, the video recording/reproducing apparatus 100 includes an input/output terminal unit 110, a tuner 121, a switching unit 123, an input/output control unit 125, a MPEG encoder 141, a hard disk drive (HDD) 151, a disk player 155, and a main control unit 160.

The input/output terminal unit 110 is configured to receive the signals generated from various image signal sources, or to output the signals reproduced from the HDD 151 which functions as a large-capacity storage device.

The input/output terminal unit 110 includes a super video input terminal (S-V IN) 111 and a super video output terminal (S-V OUT) 112, a RF input terminal (RF IN) 113 and a RF output terminal (RF OUT) 114, a line video/audio input terminal (LINE V_IN, LINE A_IN) 115 and a line video/audio output terminal (LINE V_OUT, LINE A_OUT) 116, and a serial parallel digital interface (SPDIF) which functions as a digital audio output terminal 117.

Any one of the input and output terminals can be described in greater detail as follows. The S-V IN terminal 112 receives separated brightness signals Y and chrominance signals Cr, Cb in digital format, and is used in connection with the digital camcorder, DVD player and set-top box.

The RF input terminal 113 receives public broadcasting signals, and is usually connected to an antenna.

The LINE V_IN/LINE A_IN terminal 115 receives the signals in analog phase which include a combination of brightness signal Y and chrominance signals, and is usually connected with the devices that support output of the analog image signals such as a camcorder, DVD player, set-top box, or the like.

The SPDIF 117 externally outputs the digital audio signals being transmitted from the main control unit 160. The tuner 121 adjusts reception channels so that the broadcasting signals from the channel requested by the input/output control unit 125 under control of the main control unit 160 can be received through the RF IN terminal 113.

The switching unit 123 is controlled by the input/output control unit 125, to be selectively connected to the input/output terminals.

The video decoder 131 is controlled by the main control unit 160, to decode the analog audio signals input via the switching unit 123 into digital signals, and outputs the converted digital signals to the MPEG encoder 141.

Under the control of the main control unit 160, the MPEG encoder 141 encodes the audio signals from the audio A/D converting unit 133 and the video signals from the video decoder 131 in a predetermined compression formatting method, while storing the data to be stored in the HDD 151, that is, in the large-capacity storage device. Preferably, the MPEG encoder 141 performs encoding in accordance with the MPEG-2 compression method.

The reference numeral 143 denotes a memory, and more specifically, a SDRAM which is applied as a memory for use in the encoding process of the MPEG encoder 141.

The data maintenance unit 157 performs maintenance of reproducing and recording of the data recorded in the HDD 151 and/or the disk player 155. In other words, under the control of the main control unit 160, the data maintenance unit 157 performs maintenance with respect to recording the data of the disk player 155 in the HDD 151, or recording the data of the HDD 151 in the disk player 155, and recording the data encoded by the MPEG encoder 141 in the HDD 151.

In this example, the disk player 155 is built into the video recording/reproducing apparatus. The disk player 155 can be applied to a DVD player, which can reproduce data from the recording mediums such as digital video disk (DVD) and/or compact disk (CD).

The disc player 155 is connected to perform recording/reproducing operation under the control of the main control unit 160.

The light receiving unit 171 is applied as an interface, which receives user manipulation signals from the remote controller 200 which functions as an external input device, and then outputs the received signals to the main control unit 160.

The main control unit 160 processes the user manipulation signals received through the light receiving unit 171, and controls the respective units.

The main control unit 160 in this example includes a single chip IC, in which a MPEG decoder 163 for decoding the compressed signals in accordance with the MPEG method and a central processing unit (CPU) 161 are combined with each other. Of course, the MPEG decoder 163 can be formed as a separate chip to be connected with the main control unit 160.

The flash memory 165 stores various programs related to operations of the main control unit 160. The flash memory 165 has a menu guide/processing unit 165a installed therein which operates as a program for processing the screen of menu guide list. The reference numeral 167 denotes the SDRAM, which is used by the main control unit 160 as a temporary memory.

The audio D/A converting unit 135 converts the digital audio signals from the MPEG decoder 163 of the main control unit 160 into analog audio signals, and then outputs the converted signals to the switching unit 123.

The video encoder 137 encodes the video signals from the video decoder 131 or from the MPEG decoder 163, and then outputs the encoded signals to the switching unit 123.

Under the control of the main control unit 160, the input/output control unit 125 controls the tuner 121 and the switching unit 123.

In operation of the video recording/reproducing apparatus constructed as described above, the main control unit 160 loads the operation programs of the flash memory 165 to process them in accordance with the signals received from the remote controller 200 via the light receiving unit 171.

Hereinbelow, the controlling of the main control unit 160 in accordance with the key selection will be described in greater detail with respect to the screen processing of the menu guide list.

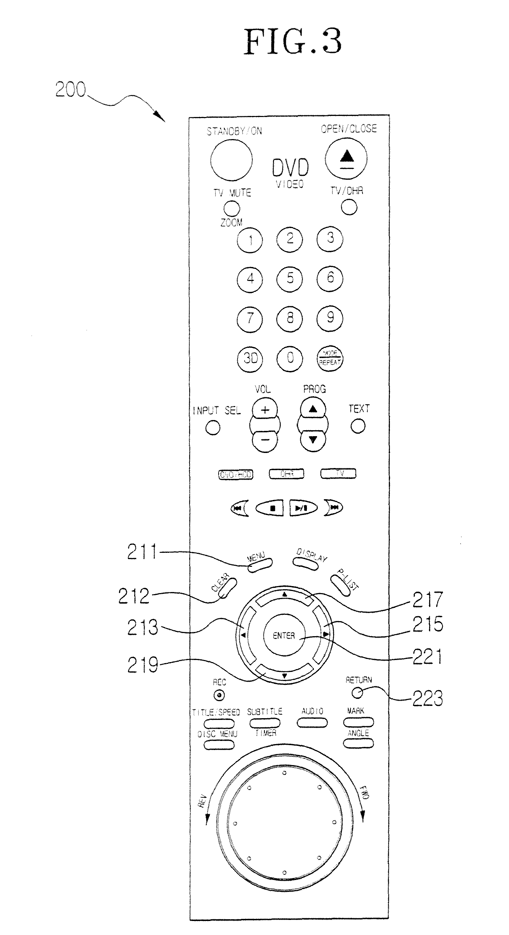

Referring first to Figure 3 that shows the remote controller 200 as an external input device of the video recording/reproducing apparatus, manipulation of the screen of menu guide list and related units will now be described.

In Figure 3, the reference numeral 211 denotes a menu key for commanding a loading and closing of the screen of menu guide list, 212 is a deletion key for deleting a file among the files of the menu guide list, and 213, 215, 217, 219 denote direction keys of left, right, up, down for directing the movement of the cursor with respect to the menus categorized on the screen of menu guide list. Further, the reference numeral 221 denotes an enter key for being used when selecting a menu, and 223 is a return key for being used when returning the current screen to the initial screen.

The keys that are not mentioned above include keys for manipulating the video recording/reproducing apparatus 100 and the television 300, the specific function of each of which is marked with characters printed in the proximity thereof. Since the printed characters clearly indicate the function of each key, a detailed description of the function of each key will be omitted for conciseness.

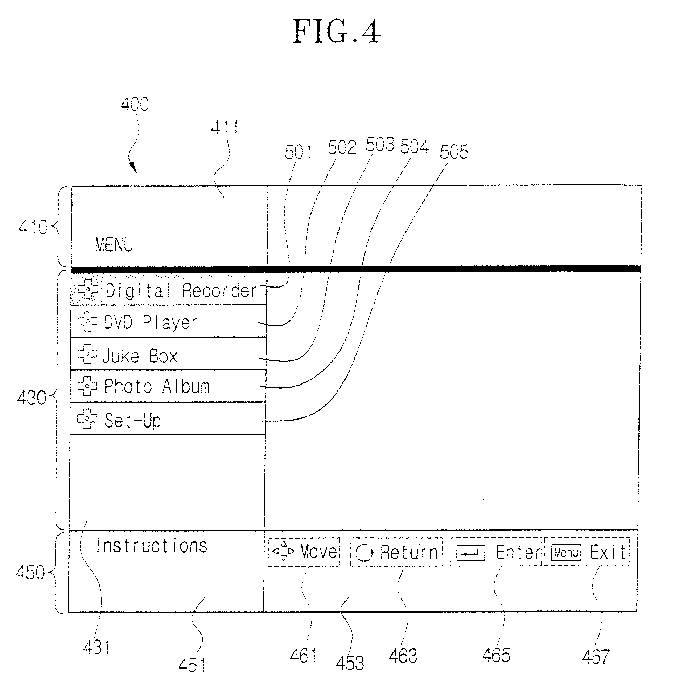

Referring now to Figure 4, description will be made with respect to one example of initial screen of the menu guide list which is provided on the television 300 through the output terminals connected to the television 300, for example, through the LINE V_OUT/LINE A_OUT terminal 116, as the main control unit 160 executes the program of the menu guide processing unit 165a, upon selection of the menu key 211 of the remote controller 200.

The initial screen 400 of the menu guide list is divided in a vertical direction into three regions, that is, upper region 410, middle region 430 and lower region 450.

The upper region 410 is divided in the horizontal direction into two blocks, and has item information "MENU" in the left block 411 corresponding to the initial screen. The middle region 430 is divided in the horizontal direction into at most three blocks for displaying sub-menus according to the selection on the menu, with the first block 431, that is, the left-most block, displaying the main menu while the rest of the blocks display blanks in the initial screen.

Accordingly, the first block 431, that is, the left-most block of the middle region 430, displays the main menu thereon. Then, upon selection of one menu among the main menu, the sub-menus of the selected menu are displayed on the block next to the first block 431, that is, on the second block 433.

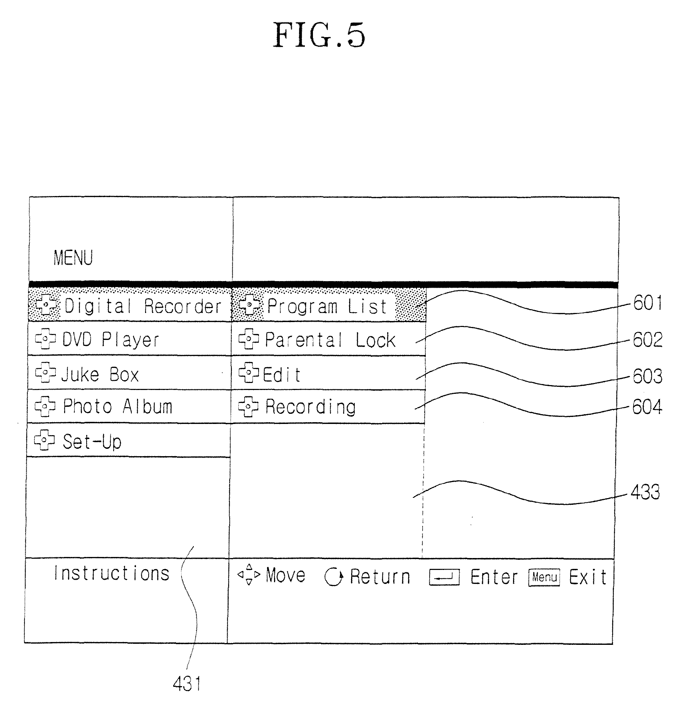

For example, selecting the "Digital Recorder" as the first main menu 501 is followed by the first sub-menu of the first main menu 501 being displayed on the second block 433 in a vertical column together with the main menu on the first block 431 (see Figure 5). The dotted-line of Figure 5 is for the purpose of clearly distinguishing the second block from the other blocks, and thus, it is not shown in the actual screen.

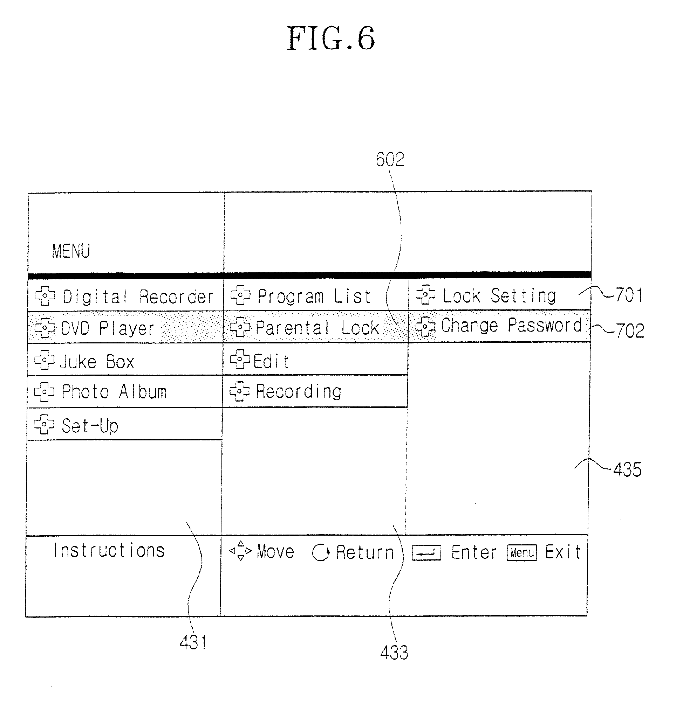

Further, selecting the first sub-menu that has its sub-menu will be followed by the second sub-menu being displayed on the third block 435, that is, on the right-most block next to the second block 433 (see Figure 6). Figure 6 shows the screen being displayed when the "Parental Lock" item 602 is selected from the first sub-menu of the "Digital Recorder" item of the first main menu 501, showing the second sub-menu being displayed together with the first sub-menu and the main menu.

As described above, selection on the menu key 211 of the remote controller 200 is followed by the provision of screen of menu guide list having the main menu displayed on the first block 431 of the middle region 430. Then, selection on one item from the main menu is followed by the screen of the first sub-menu of the selected item of the main menu being displayed on the second block 433 next to the first block 431. By displaying the sub-menus of the selection as made in turn and on the same screen with the upper menus, the user is enabled to review the process of menu selection at a glance, and thus will find it convenient in making a menu selection.

The lower region 450 displays the information related to a key manipulation of the remote controller 200 corresponding to the screen 400 of the menu guide list. As shown in Figure 4, the term "Instructions" is displayed in the first block 451, which is the block arranged in the same vertical column as the first blocks 411, 431 of the upper and middle regions 410, 430, thus indicating that the information related to the key manipulation is displayed in the next block, that is, in the second block 453. Accordingly, the second block 453 displays information about the keys of the remote controller 200 and the functions corresponding to the keys of the remote controller 200.

For purposes of discussion, each of the marks and information displayed on the lower region 450 are referred to as a "mark". Referring to the respective marks according to their corresponding functions, there are cursor guiding mark 461, return guiding mark 463, selection guiding mark 465 and exit guiding mark 467 displayed in the lower region 450. Of course, keys supported by the remote controller 200 can be added or deleted through change of marks indicated at the lower region 450 in accordance with the selections made on the menu.

The cursor guiding mark 461 is used when moving the cursor among the items selectively arranged in the middle region 430, indicated by the direction marks corresponding to the direction keys 213, 215, 217, 219 of the remote controller 200 and characters "Move" indicating the information on key manipulation. The "cursor" is one of the ways to indicate to the user that the selection is moved from the current position to the next position corresponding to the manipulation of the direction keys 213, 21, 217, 219. Beside the cursor, other various types of indication such as separate mark, highlighting the selected position, shading, change of color, and so on, can also be used.

The return guiding mark 463 is used when switching the screen being displayed from the current screen to the previous screen, and is indicated by a mark corresponding to the return key 223 of the remote controller 200 and the characters "Return" indicating the information on key manipulation.

The selection guiding mark 465 is used when selecting item on which the cursor is placed, and is indicated by a mark corresponding to the enter key 221 of the remote controller 200 and the characters "Enter" indicating the information on key manipulation.

The exit guiding mark 467 is used when switching the current screen to the other screen, that is, when closing the screen 400 of menu guide list, and is indicated by the mark corresponding to the menu key 211 of the remote controller 200 and the characters "Exit" indicating the information on key manipulation.

The user moves the cursor among the displayed items using the up, down, left, and right direction keys 213, 215, 217, 219 of the remote controller 200.

Also, the user selects the item on which the cursor is placed, by manipulating the enter key 221 of the remote controller 200 thereby having the sub-screens of the selected item displayed on the display device. As described above, when the cursor is placed on the item that has its sub-menu, the sub-menu of the selected item is displayed according to the menu displaying process as described above. When the cursor is placed on the item that has no sub-menu, the resultant screen of executing the selected item is displayed on the middle region 430.

Preferably, the main control unit 160 controls the video recording/reproducing apparatus 100 so that the selected item having no sub-menu can be executed with the selection on the right direction key 215 among the direction keys 213, 215, 217, 219 of the remote controller 200, thereby displaying the resultant screen of executing the selected item on the middle region 430 in the same process as manipulating on the enter key 221.

Further, the main control unit 160 having loaded the screen 400 of menu guide list in the television 300 unloads the screen of the menu guide list upon reception of the input of the menu key 211 selection signal, so that the screen 400 of menu guide list can be closed.

The menus provided through the screen 400 of menu guide list according to an embodiment of the present invention will now be described.

First, as shown in Figure 4, the main menu comprises a list of terms such as "Digital Recorder" which represents the first main menu 501 indicated by the characters corresponding to the HDD 151, "DVD Player" which represents the second main menu 502 indicated by the characters corresponding to the built-in disc player 155, "Juke Box" which represents the third main menu 503 indicated by the characters corresponding to the use of audio signals, "Photo Album" which represents the fourth main menu 504 indicated by the characters corresponding to the use of images, and "Set-Up", which represents the fifth main menu 505 indicated by the characters representing environment setting.

As shown in Figure 5, the first sub-menu of the first main menu 501 comprises a list of "Program list" menu 601, "Parental-lock" menu 602, "Edit" menu 603, and "Recording" menu 604.

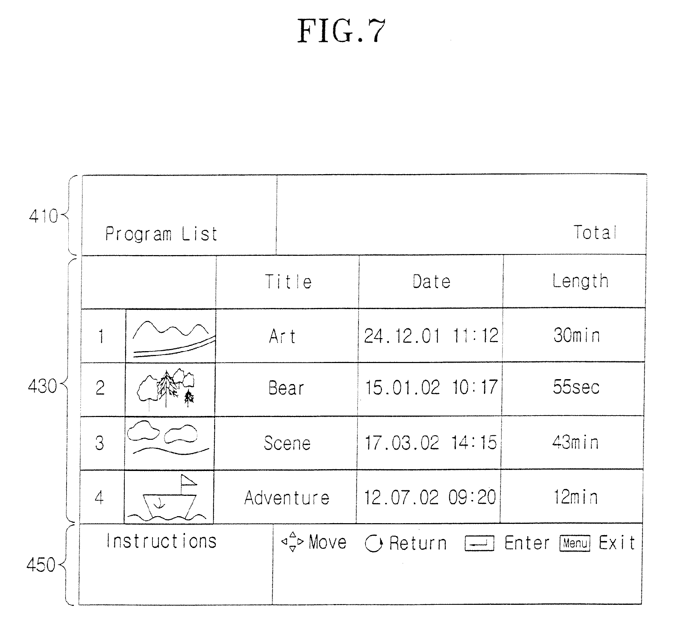

The "Program list" menu 601 is used when viewing the list of reproducible programs recorded in the HDD 151. Accordingly, upon selection on the "Program list" menu 601, the main control unit 160 changes the current screen so as to display on the middle region 430 the guide information about the programs recorded in the HDD 151 (see Figure 7). The program guide information may include, for example, still video of the first screen, title information, recording date information and information about the reproducing time of the program in accordance with the length of the program.

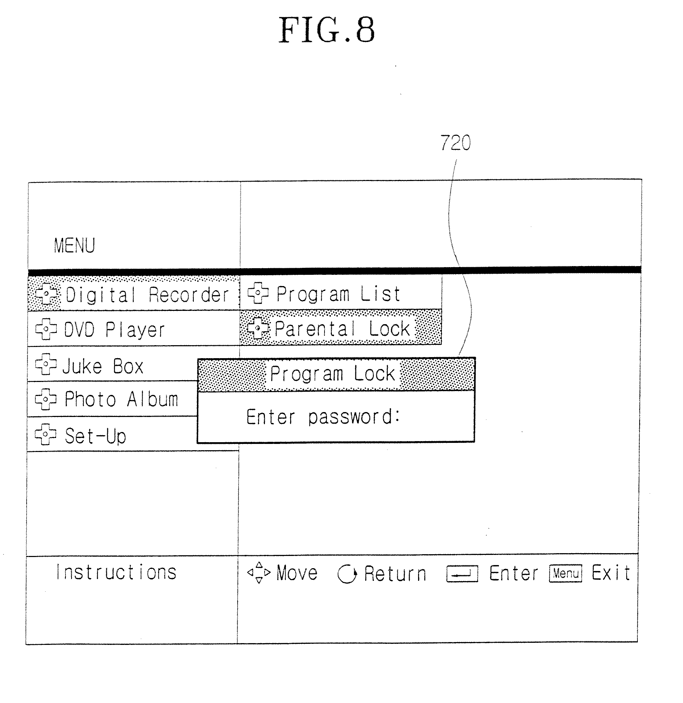

The "Parental-lock" menu 602 is used when limiting certain age groups from accessing the program recorded in the HDD 151. As the name of this menu 602 suggests, the "Parental-lock" menu 602 is provided to limit children, in particular, from accessing certain programs. Upon selection of the "Parental-lock" menu 602, as shown in Figure 8, the main control unit 160 displays a window 720 on the screen 400 of the menu guide list, asking the user to input a password. When the password as input matches a predetermined password, the main control unit 160 displays the "Lock-setting" menu 701and the "Change password" menu 702 as the second sub-menu (see Figure 6). The "Lock-setting" menu 701 supports a selective limit of access to programs of the HDD 151, and the "Change password" menu 702 is for use when changing the password.

With the selection of the "Lock-setting" menu 701, the main control unit 160 senses the lock-setting on the programs recorded in the HDD 151, and displays the guide information so that the user can set the lock. The user moves the cursor to the lock-setting window 705 at the right-most side of the program that he or she wishes to set the lock, and manipulates on the "Enter" key 221. Accordingly, the mark of lock is displayed on the program guide information, indicating that the program is locked, and thus, the locked program is processed not to be displayable, so that the locked program may not be included in the program guide information during the execution of the program list menu 601.

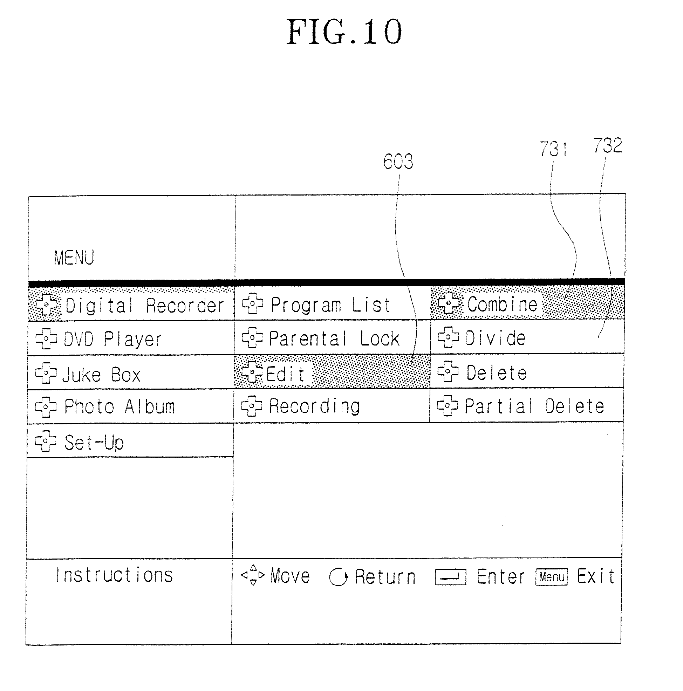

With the selection of the "Edit" menu 603 of Figure 5, the second sub-menu, such as the one shown in Figure 10, is processed so as not to be displayed on the screen 400 of menu guide list.

In Figure 10, the combine menu 731, the sub-menu of the edit menu 603, supports the combining process so that the user can combine the programs of the HDD 151.

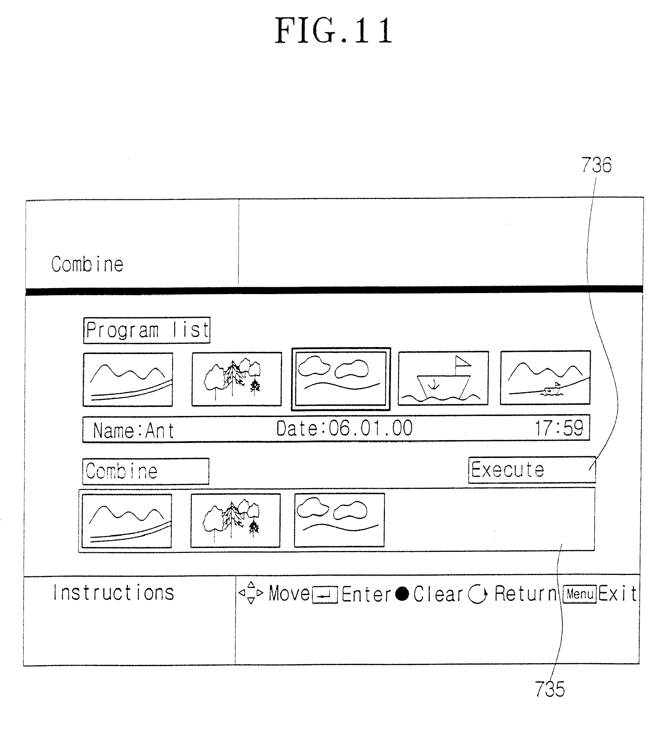

With the selection of the "Combine" menu 731, the main control unit 160 provides the screen as shown in Figure 11, in which a predetermined number of still videos are displayed on the upper part of the middle region 430, under the "Program list" item in a predetermined order, and the videos selected by the user for combining are displayed on the lower part of the middle region 430, under the "Combine" item. After that, with the election of the execute menu 736, the main control unit 160 combines the programs corresponding to the videos of the "Combine" item, and records the combined one as a new file.

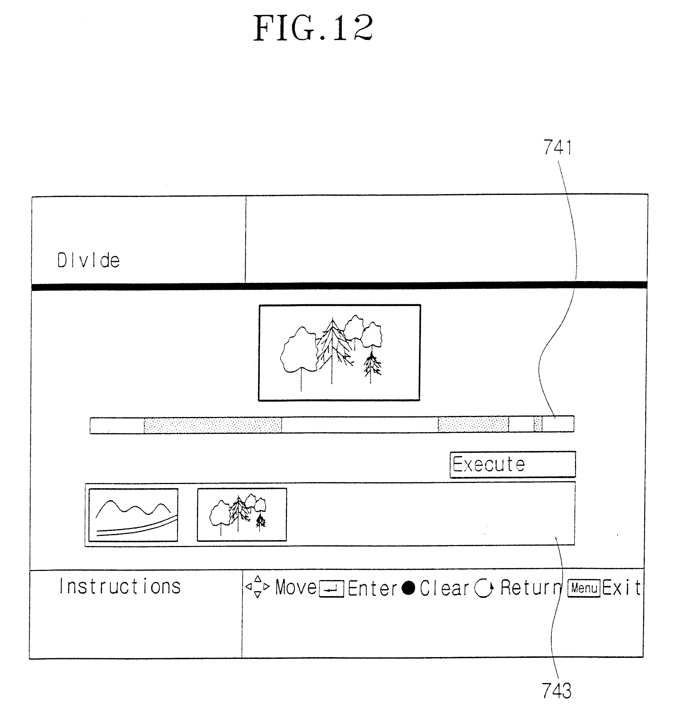

The "Divide" menu 732 supports the dividing of the programs recorded in the HDD 151 in a single file unit into a plurality of programs. With the selection of the "Divide" menu 732, as shown in Figure 12, the list of still videos corresponding to the programs recorded on the HDD 151 is displayed on the upper part of the middle region. Also displayed are a bar graph 741 corresponding to the length of the selected still video, and still videos of the first parts of the divided regions corresponding to the dotted parts of the bar graph 741 which are divided by the manipulation of the user on the remote controller 200. The still videos of the first parts of the divided regions are displayed on the window 743 of divided videos, under the bar graph 741. Then, with the selection of the "Execute" key, the regions selected by the user are divided and stored in the HDD 151.

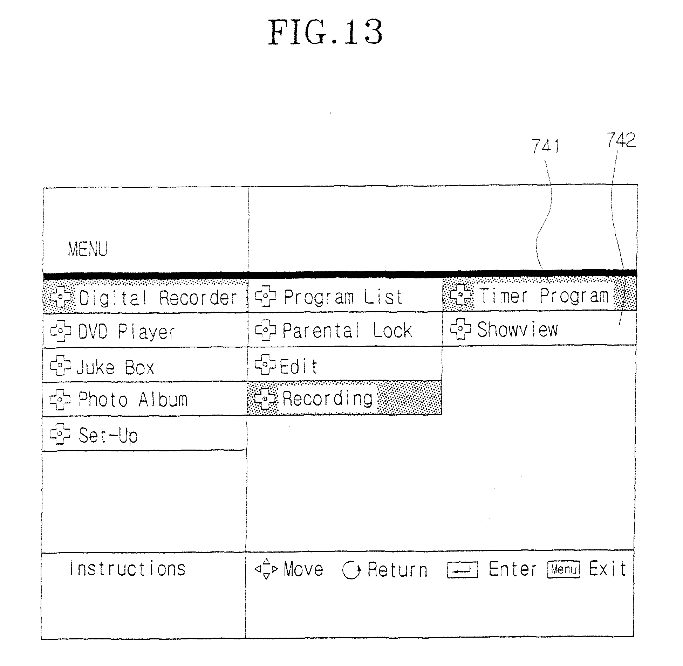

With the selection of the "Recording" menu 604, the "Timer program" menu 741 and the "Show watching" menu 742 are displayed as the sub-menus (see Figure 13).

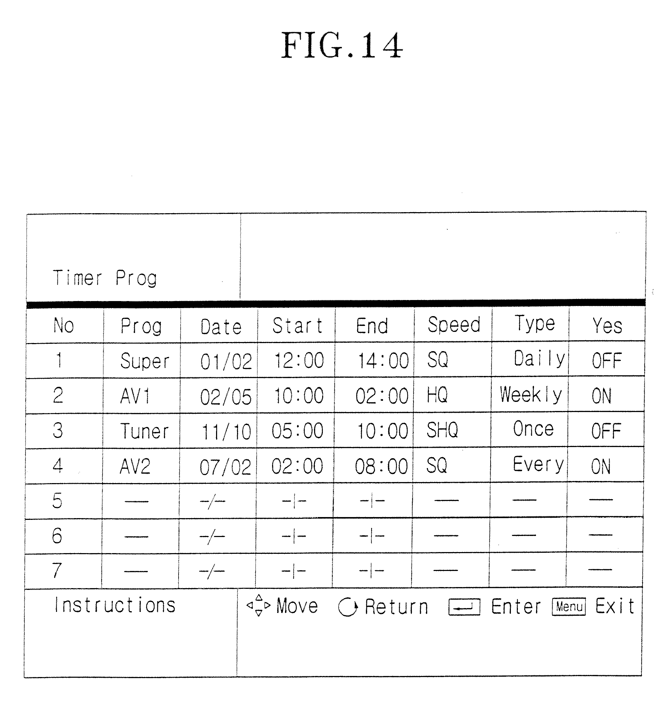

With the selection of the "Timer program" menu 741, a recording guide window is provided so that the user can make selection from the selectable image sources (see Figure 14), and records the desired program in the HDD 151.

With the selection of the "Show watching" menu 742, the main control unit 160 provides a program code input window so that the program recording can be set by the input of the code, which is generally called "G-code", and processes the corresponding program to be recorded in the HDD 151 according to the program code as input.

Meanwhile, with the selection of the "DVD player" as the second main menu 502, the first sub-menu is provided for the user to select various functions supported by the disc recording method.

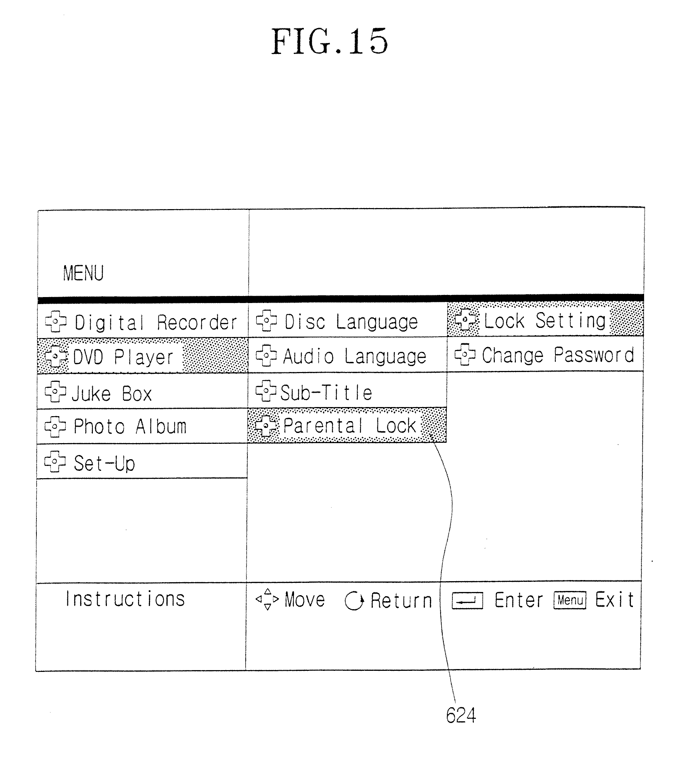

As shown in Figure 15, the first sub-menu of the second main menu 502 includes a "Disc Language" selection menu for selecting one from the languages supported by the disc recording method, an "Audio Language" selection menu for use when selecting audio language, a "Subtitle" menu for selecting the languages of subtitle, and a "Parental Lock" menu 624 for supporting limit of certain age groups from accessing certain information.

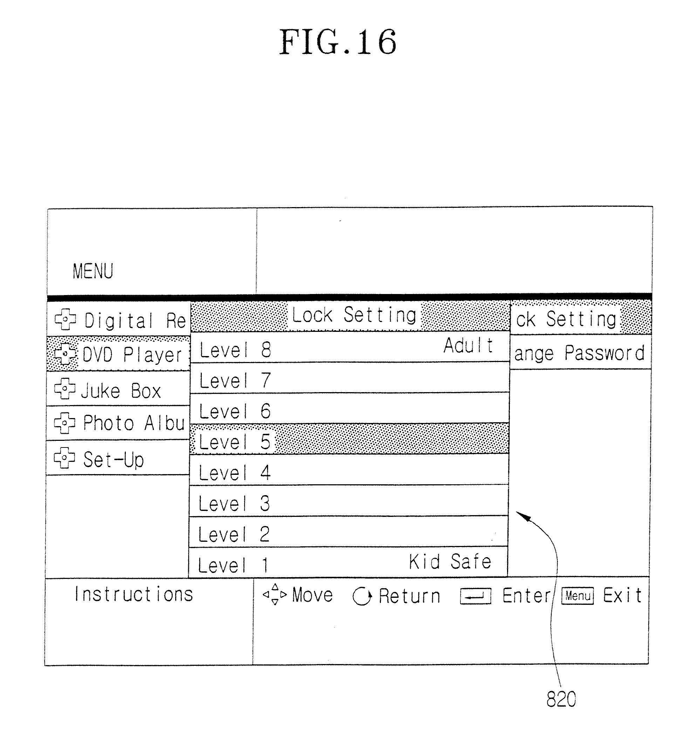

With the selection of the "Disc Language" selection menu, a list of countries is displayed as the second sub-menu, thus allowing the user to set the desired language through a simple key manipulation. With the selection of the "Parental Lock" menu 624, password authorization is carried out in the same way as carried out in the first main menu 501. When the password as input matches with a predetermined password, the "Lock-setting" menu and the "Change password" menu is input as the second sub-menu. Figure 16 shows the execution screen 820 of the "Lock-setting" menu being displayed on the screen 400 of menu guide list for the user to set the viewer classification. For example, with the selection of level 5, the viewer classification recorded in the disc mounted in the disc player 155 is analyzed upon reception of the reproduce request, and the disc is reproduced only when its viewer classification is lower than the level 5.

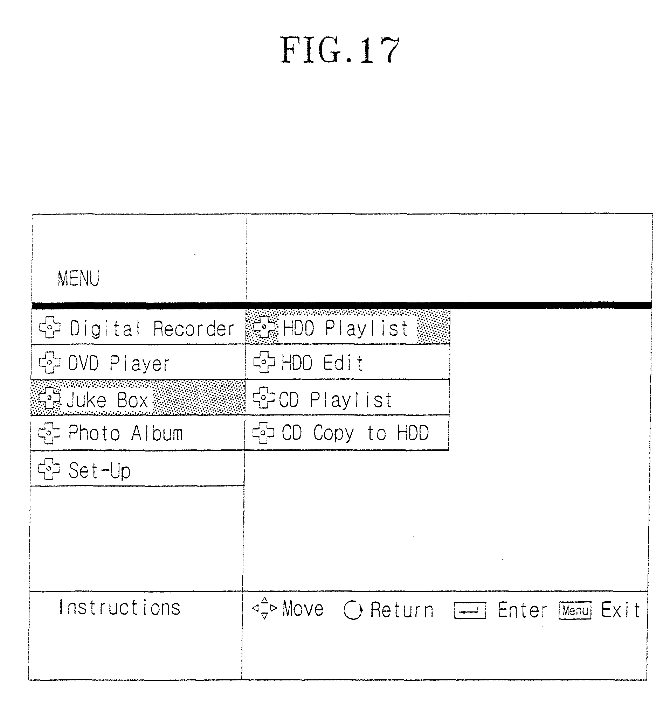

Next, Figure 17 shows the first sub-menu of the "Juke Box" menu, which is provided with the selection of the "Juke Box" menu as the third main menu 503.

With the selection of the 'HDD Playlist" menu, a list of audio files recorded in the HDD 151 is made. The main control unit 160 may extract the data with certain extension indicating audio files such as "*.mp3", or display a list of files in the directory of the audio files.

The rest of the first sub-menus are easily understandable through their names, which are mainly focused on supporting the edition, recording and file list-up of the audio files of the audio disc mounted either in the HDD 151 or in the disc player 155. A detailed description of these sub-menus will be omitted for conciseness.

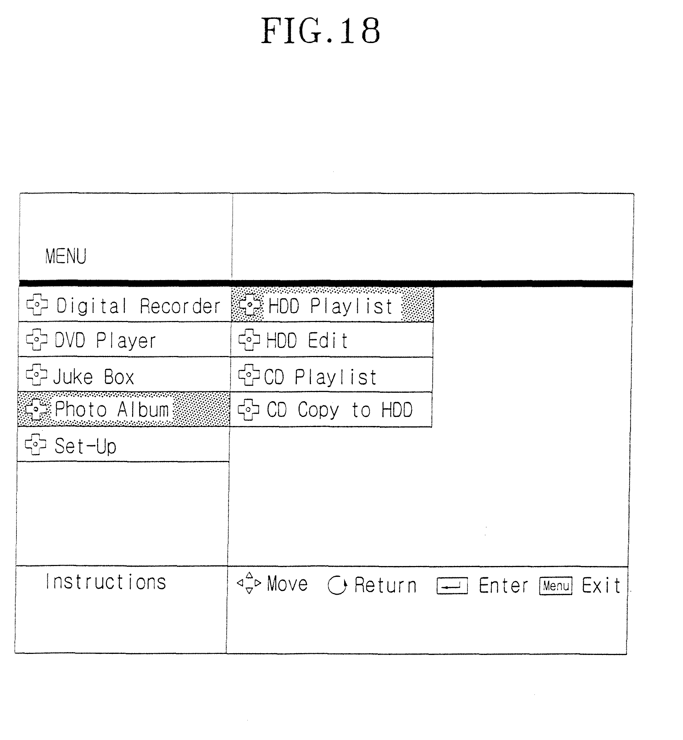

Figure 18 shows the first sub-menu of the "Photo Album" menu, which is selected as the fourth main menu 504. The "Photo Album" menu supports the functions of viewing and editing the image files of the still videos recorded in the disc in the disc drive 155, such as files in JPEG format, and also, the function of recording the image files of the disc into the HDD 151.

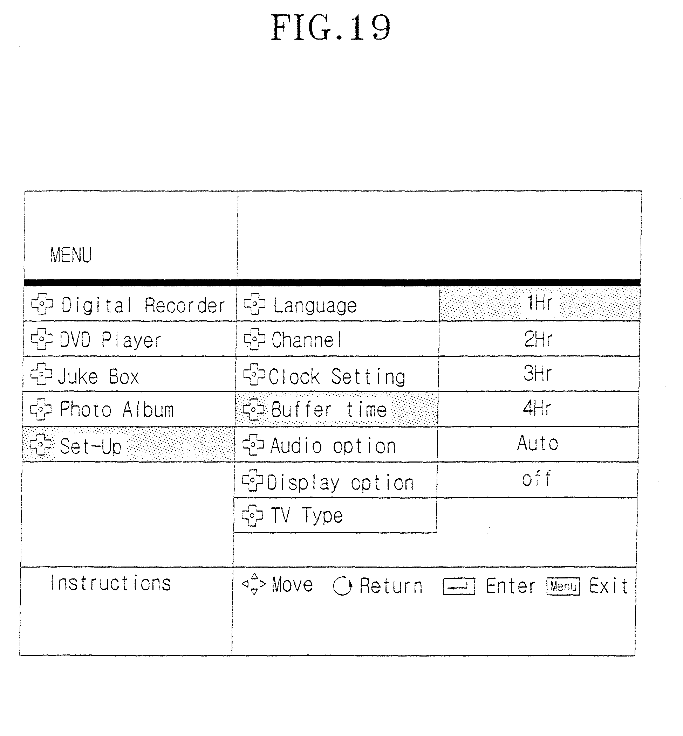

Figure 19 shows one example of the menu subordinated to the fifth main menu 505, that is, to the "Set-up" menu.

Figure 19 shows the first sub-menu supporting the use of the video recording/reproducing apparatus, and the list of second sub-menu of the first sub-menu. In this instance, the second sub-menu is the "Buffer time" menu. The "Buffer time" menu is used as the first sub-menu when temporarily storing the image signals from the selected image signal source in the hard disc by the amount supported by the second sub-menu in the first-in first-out manner.

A detailed description of the rest of the menu will be omitted for conciseness.

As described above, with the video recording/reproducing apparatus according to embodiments of the present invention, the respective functions are displayed in greater detail as the selections of the user are made from the upper menu to the lower menu. Since such displayed functions are selectable using the keys provided on the remote controller, user convenience greatly improves.

Although certain embodiments of the present invention have been described, it will be understood by those skilled in the art that the present invention should not be limited to the described preferred embodiment, but various changes and modifications can be made within the spirit and scope of the present invention as defined by the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method for displaying a menu screen for use in a video recording/reproducing apparatus (100) that records an image signal from an image signal generating source in a memory device and reproduces and outputs the recorded image signal to an external display device (300), the method **characterised by** comprising the steps of:
upon receiving a request signal for a screen of a combine menu from an external input device (200), displaying the screen of the combine menu on the display device (300) with a plurality of still videos displayed, each corresponding to a program recorded on the recording/reproducing apparatus (100), for selection by a user in order to combine a selected plurality of programs corresponding to the still videos into a single program.

2. The method as claimed in claim 1, wherein the plurality of still videos displayed for selection by the user are displayed in a predetermined order.

3. The method as claimed in claim 1 or 2, wherein a predetermined number of still videos are displayed for selection by a user.

4. The method as claimed in claim 1, 2 or 3, wherein the screen of the combine menu is divided into an upper (410), a middle (430) and a lower region (450), with the middle region (430) displaying the still videos.

5. The method as claimed in claim 4, wherein the still videos displayed for selection by a user are displayed on an upper part of the middle region (430).

6. The method as claimed in claim 4 or 5, wherein the still videos selected by the user for combining are displayed on a lower part of the middle region (430).

7. The method as claimed in any preceding claim, wherein the plurality of still videos displayed for selection by a user are displayed under a program list item.

8. The method as claimed in any preceding claim, wherein the still videos selected by the user for combining are displayed under a combine item.

9. The method as claimed in any preceding claim, the combine menu comprising an execute menu, wherein the selected plurality of programs are combined following selection of the execute menu by the user.

10. The method as claimed in any of claims 4 to 9, comprising displaying in the upper region (410) information about items corresponding to the contents displayed in the middle region (430).

11. The method as claimed in any preceding claim, comprising:
displaying in a lower region (453) of the combine menu information about key manipulation of the external input device (200) corresponding to the screen of the combine menu.

12. The method as claimed in claim 11, wherein the displayed information is information about keys of the external input device (200) and functions corresponding to the keys of the external input device (200).

13. The method as claimed in claim 12, the displayed information comprising a cursor guiding mark (461), a returning guiding mark (463) and an exit guiding mark (467).

14. A video recording/reproducing apparatus (100), for recording an image signal from an image signal generating source in a memory device, and reproducing and outputting the recorded image signal to an external display device (300), the video recording/reproducing apparatus (100)
**characterised by** comprising:
an interface unit (171), installed in a body of the video recording/reproducing apparatus (100), for receiving a user input signal from an external input device (200) and enabling functions supported in the video recording/reproducing apparatus (100) to be selectable through use of the external input device (200); and
a main control unit (160) which, upon receiving via the interface unit a request signal for a screen of a combine menu, is adapted to control the video recording/reproducing apparatus (100) to display the screen of the combine menu on the display device (300) with a plurality of still videos displayed for selection by a user in order to combine a selected plurality of programs corresponding to the still videos as a single program.

15. The video recording/reproducing apparatus as claimed in claim 14, wherein the main control unit (160) is arranged to display the plurality of still videos displayed for selection by the user in a predetermined order.

16. The video recording/reproducing apparatus as claimed in claim 14 or 15, wherein the main control unit (160) is arranged to display a predetermined number of still videos for selection by a user.

17. The video recording/reproducing apparatus as claimed in claim 14, 15 or 16, wherein the screen of the combine menu is divided into an upper (410), a middle (430) and a lower region (450), with the middle region (430) displaying the still videos.

18. The video recording/reproducing apparatus as claimed in claim 17, wherein the main control unit (160) is arranged to display the still videos displayed for selection by a user on an upper part of the middle region (430).

19. The video recording/reproducing apparatus as claimed in claim 17 or 18, wherein the main control unit (160) is arranged to display the still videos selected by the user for combining upon a lower part of the middle region (430).

20. The method as claimed in any of claims 14 to 19, wherein the main control unit (160) is arranged to display the plurality of still videos displayed for selection by a user under a program list item.

21. The video recording/reproducing apparatus as claimed in any of claims 14 to 20, wherein the main control unit (160) is arranged to display the still videos selected by the user for combining under a combine item.

22. The video recording/reproducing apparatus as claimed in any of claims 14 to 21, wherein the main control unit (160) is arranged to display the combine menu comprising an execute menu, wherein the selected plurality of programs are combined following selection of the execute menu by the user.
